# EUROPÄISCHE PATENTANMELDUNG

(11) **EP 0 985 847 A2**
(43) Veröffentlichungstag der Anmeldung: **15.03.2000**
(21) Anmeldenummer: 99116746.1
(22) Anmeldetag: 27.08.1999
(51) Int. Cl.: F16F 7/00, B60R 22/28, B60R 22/34

(54) **Vorrichtung zur Kraftbegrenzung**

(30) Priorität: 10.09.1998 DE 29816280
(71) Anmelder: TRW Occupant Restraint Systems GmbH & Co. KG, 73551 Alfdorf (DE)
(72) Erfinder: Röhrle, Martin, 73557 Mutlangen (DE)
(74) Vertreter: Sties, Jochen, Dipl.-Ing.

(57) **Zusammenfassung**

Eine Vorrichtung zur Kraftbegrenzung enthält ein ringförmiges Gehäuse (10), in dem eine Führungsbahn (20) gebildet ist, einen im Inneren des Gehäuses (10) konzentrisch mit diesem angeordneten Mitnehmer (40), der relativ zum Gehäuse (10) drehbar ist, und ein Zugmittel (22), das an dem Mitnehmer (40) festgelegt ist, sich entlang einem Teil seiner Länge in der Führungsbahn (20) erstreckt und durch Drehung des Mitnehmers (40) relativ zum Gehäuse (10) aus der Führungsbahn (20) herausgezogen und auf den Mitnehmer (40) aufgewickelt werden kann.

## Beschreibung

Die Erfindung betrifft eine Vorrichtung zur Kraftbegrenzung, die insbesondere bei einem Gurtaufroller für einen Fahrzeugsicherheitsgurt verwendet werden kann.

Eine Kraftbegrenzungsvorrichtung dient dazu, eine Bewegung zwischen zwei Bauteilen dann zu ermöglichen, wenn zwischen diesen eine vorbestimmte Kraft oder ein vorbestimmtes Drehmoment überschritten wird. Die darm auftretende Bewegung kann beispielsweise in einen zusätzlichen Weg zur Verzögerung, beispielsweise eines Fahrzeuginsassen, umgewandelt werden, indem durch die Relativbewegung beispielsweise Gurtband von einer Gurtspule eines Gurtaufrollers freigegeben wird.

Solche Kraftbegrenzungsvorrichtungen sind in den verschiedensten Ausführungsformen bekannt. Ein Problem bei diesen Kraftbegrenzungsvorrichtungen besteht darin, daß unter gewissen Umständen eine Kennlinie von Widerstand über Relativbewegung gewünscht wird, die absinkt. Im Falle von zwei zueinander verdrehbaren Bauteilen bedeutet dies, daß gewünscht wird, daß das zur Verdrehung der beiden Bauteile relativ zueinander erforderliche Drehmoment mit fortschreitendem Drehwinkel absinkt. Eine solche Kennlinie kann mit den bisher bekannten Kraftbegrenzungsvorrichtungen entweder überhaupt nicht oder nur mit hohem konstruktiven Aufwand erzielt werden.

Die Aufgabe der Erfindung besteht somit darin, eine Kraftbegrenzungsvorrichtung zu schaffen, die in einfacher und zuverlässiger Weise eine Kennlinie von Widerstand über Relativbewegung ermöglicht, die absinkt.

Diese Aufgabe wird mittels einer Vorrichtung zur Kraftbegrenzung gelöst, mit einem ringförmigen Gehäuse, in dem eine Führungsbahn gebildet ist, einem im Inneren des Gehäuses konzentrisch mit diesem angeordneten Mitnehmer, der relativ zum Gehäuse drehbar ist, und einem Zugmittel, das an dem Mitnehmer festgelegt ist, sich entlang einem Teil seiner Länge in der Führungsbahn erstreckt und durch Drehung des Mitnehmers relativ zum Gehäuse aus der Führungsbahn herausgezogen und auf den Mitnehmer aufgewickelt werden kann. Diese Konstruktion beruht auf dem Grundprinzip, daß der Widerstand, der einer Relativdrehung zwischen dem Gehäuse und dem Mitnehmer entgegenwirkt, durch Reibung und Umformungsarbeit des Zugmittels in der Führungsbahn bereitgestellt wird. Diese Widerstandskraft ist umso höher, je länger der sich in der Führungsbahn erstreckende Teil des Führungsmittels ist. Bei Relativdrehung zwischen dem Gehäuse und dem Mitnehmer wird das Zugmittel jedoch aus der Führungsbahn herausgezogen, so daß die bereitgestellte Widerstandskraft absinkt. Im Extremfall würde die Widerstandskraft in dem Moment, in welchem das Zugmittel vollständig aus der Führungsbahn herausgezogen wird, auf Null absinken; dieser Zustand kann jedoch konstruktiv verhindert werden, falls er unerwünscht ist.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In diesen zeigen:
- Figur 1 eine perspektivische Explosionsansicht einer erfindungsgemäßen Kraftbegrenzungsvorrichtung;
- Figur 2 das Gehäuse und den Mitnehmer von Figur 1 in teilgeschnittenen Ansichten sowie das zugehörige Zugmittel;
- Figur 3 in einer schematischen Querschnittsansicht die Kraftbegrenzungsvorrichtung von Figur 1 angeordnet in einem Gurtaufroller;
- Figur 4 in einer schematischen Seitenansicht die Kraftbegrenzungsvorrichtung von Figur 1 angeordnet in einem Gurtaufroller;
- Figur 5 eine Kennlinie von Gurtbandabzugskraft über abgezogener Gurtbandlänge bei einem mit der Kraftbegrenzungsvorrichtung von Figur 1 versehenen Gurtaufroller ohne Torsionsstab; und
- Figur 6 eine Kennlinie von Gurtbandabzugskraft über abzogener Gurtbandlänge bei einem mit der Kraftbegrenzungsvorrichtung von Figur 1 versehenen Gurtaufroller mit Torsionsstab.

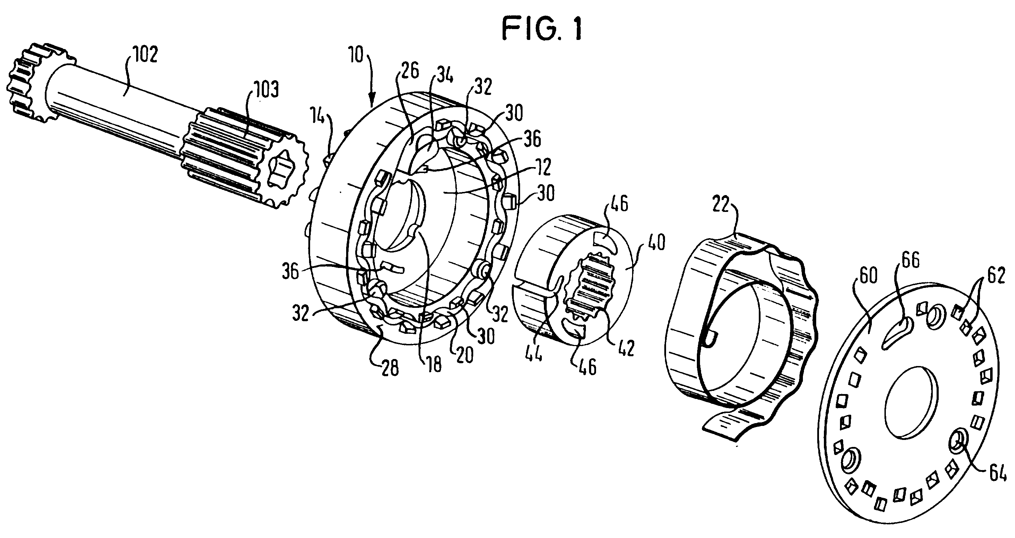

Anhand der Figuren 1, 2 und 3 wird nun der Aufbau einer erfindungsgemäßen Vorrichtung zur Kraftbegrenzung beschrieben. Die Kraftbegrenzungsvorrichtung enthält ein allgemein ringförmiges Gehäuse 10, auf dessen einer Stirnseite eine Platte 12 mit einer Verzahnung 14 ausgebildet ist. Die Platte 12 ist mit einer Durchgangsöffnung 16 versehen, an deren Rand mehrere Nasen 18 ausgebildet sind.

Im Gehäuse 10 ist eine als Kanal ausgestaltete Führungsbahn 20 für ein Zugmittel 22 gebildet, das hier als Federstahlband 22 mit konstantem Querschnitt ausgebildet ist. Der Kanal 20 erstreckt sich in einer Schlangenlinie etwa konzentrisch um die Mittelachse des Gehäuses 10 herum entlang einer Kreisbahn, die allerdings zwischen dem Ende 24 des Kanals 20 und einem zum Inneren des Gehäuses 10 führenden Einlaufbereich 26 nicht geschlossen ist. Der schlangenlinienförmige Kanal 20 ist so ausgebildet, daß er sich vollständig zwischen zwei gedachten Zylinderflächen befindet, die zur Mittelachse des Gehäuses 20 konzentrisch sind. Der Kanal 20 berührt also abwechselnd die innere und die äußere gedachte Zylinderfläche, und zwar die innere Zylinderfläche mit den nach innen gerichteten Biegungen und die äußere Zylinderfläche mit den nach außen gerichteten Biegungen.

Der Kanal 20 ist an der von der Platte 12 abgewandten Stirnseite 28 des Gehäuses 10 offen. Auf dieser Stirnseite 28 sind entlang dem Kanal 20 mehrere Vorsprünge 30, 32 angeordnet. Jeder Vorsprung befindet sich auf der Innenseite einer Biegung des Kanals unmittelbar angrenzend an diesen, wobei jeder Vorsprung 30, 32 mit einer Abschrägung versehen ist, die in den Kanal 20 übergeht. Der Unterschied zwischen den Vorsprüngen 30 und den Vorsprüngen 32 besteht darin, daß die Vorsprünge 32 mit größerem Querschnitt ausgebildet sind als die Vorsprünge 30. Zusätzlich ist ein Vorsprung 34 vorgesehen, der am Einlaufbereich 26 des Kanals 20 angeordnet ist und ebenfalls eine Abschrägung aufweist.

An der Platte 12 sind ferner zwei Laschen 36 vorgesehen, die in das Innere des Gehäuses 10 hineinragen.

Im Inneren des Gehäuses ist ein Mitnehmer 40 angeordnet, der mit einer Mittelöffnung 42 versehen ist, die mit einem Vielzahnprofil ausgebildet ist. Der Mitnehmer 40 ist außerdem mit einem Einschnitt 44 versehen, der sich ausgehend von der Außenfläche des Mitnehmers 40 hakenförmig in das Innere hinein erstreckt. Schließlich ist der Mitnehmer 40 auf jeder Stirnseite mit zwei einander diametral gegenüberliegenden, schweifförmigen Aussparungen 46 versehen.

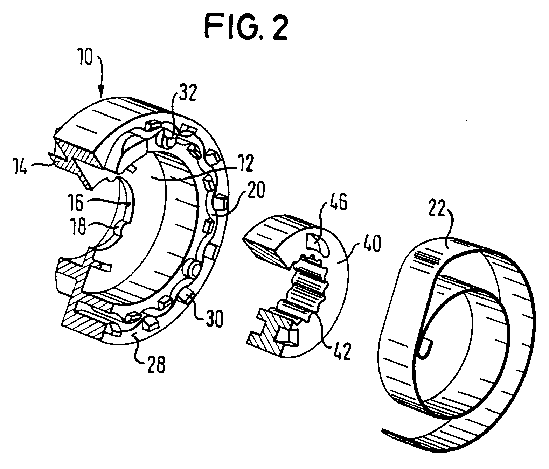

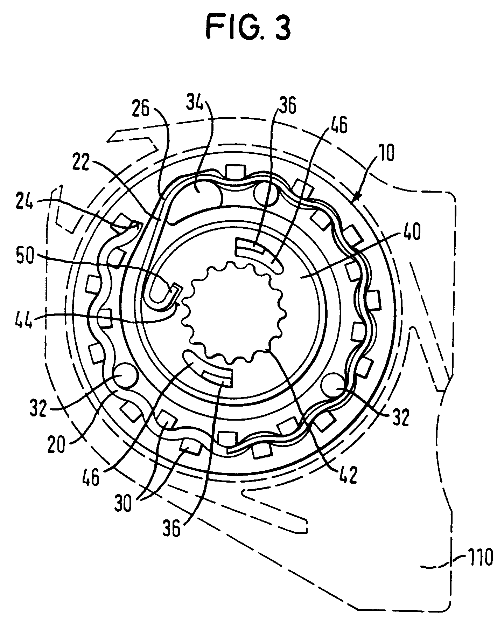

Der Mitnehmer 40 wird konzentrisch zum Gehäuse 10 in dessen Innerem angeordnet. Der Mitnehmer 40 greift dabei mit seinen schweifförmigen Aussparungen 46 über die Laschen 36. Dann wird zwischen dem Mitnehmer 40 und dem Gehäuse 10 das Stahlband 22 montiert, wobei dieses mit einem Ende 50 in den Einschnitt 44 des Mitnehmers 40 eingreift. Ausgehend von diesem Ende 50 erstreckt sich das Stahlband eine Umdrehung um den Mitnehmer 40 herum, so daß eine ausreichend große Umschlingungsreibung aufgebaut werden kann, die übermäßige Belastungen des Endes 50 des Stahlbandes verhindert. Anschließend verläuft das Stahlband 22 durch den Einlaufbereich 26 in den Kanal 20 hinein, in dem sich das Stahlband 22 schlangenlinienförmig erstreckt. In Figur 2 ist das Stahlband 22 in nicht montiertem Zustand gezeigt, woraus ersichtlich ist, daß der später im Kanal 20 angeordnete Teil des Stahlbandes noch nicht schlangenlinienförmig verläuft. In Figur 1 ist das Stahlband in der Form gezeigt, die es nach Einsetzen in den Kanal 20 hat. Es ist deutlich der schlangenlinienförmige Verlauf zu erkennen, der dem Stahlband vom Kanal 20 gegeben wird. Das Einsetzen des Stahlbandes in den Kanal 20 wird von den mit den Abschrägungen versehenen Vorsprüngen 30, 32, 34 erleichtert. Wie in Figur 3 zu sehen ist, erstreckt sich das Stahlband 20 nicht entlang der gesamten Länge des Kanals 20; der Kanal 20 ist also hier länger ausgebildet, als dies zur Aufnahme des verwendeten Stahlbandes erforderlich wäre. Dies ermöglicht, bei demselben Gehäuse unterschiedliche Längen eines Stahlbandes zu verwenden.

Die beschriebene Kraftbegrenzungsvorrichtung arbeitet in der folgenden Weise: Wenn der Mitnehmer 40 entgegen dem Uhrzeigersinn relativ zum Gehäuse 10 verdreht wird, zieht der Mitnehmer das Stahlband 22 aus dem Kanal 20 heraus. Bei dieser Bewegung entsteht im Bereich jeder Biegung des Stahlbandes 22 eine Widerstandskraft, die zum einen aus der Umschlingungsreibung zwischen der Wandung des Kanals an dieser Stelle und dem Stahlband und zum anderen aus dem im Biegewiderstand des Stahlbandes resultiert. Diese Widerstandskraft wirkt einer Relativdrehung zwischen dem Mitnehmer 40 und dem Gehäuse 10 entgegen.

Mit zunehmender Verdrehung des Mitnehmers 40 relativ zum Gehäuse wird das Stahlband 22 immer weiter aus dem Kanal 20 herausgezogen, so daß immer weniger Biegestellen des Stahlbandes 22 zur Verfügung stehen, die eine Widerstandskraft erzeugen können. Aus diesem Grunde nimmt der Widerstand gegen eine Relativdrehung zwischen dem Mitnehmer 40 und dem Gehäuse 10 mit zunehmendem Drehwinkel ab. Ein solcher Verlauf von Widerstand über Relativbewegung war aus dem Stand der Technik nur bekannt, wenn ein Zugmittel mit sich verringerndem Querschnitt verwendet wurde. Ein solcher Querschnitt ist jedoch nur mit extrem hohem Aufwand herstellbar. Bei der erfindungsgemäßen Kraftbegrenzungsvorrichtung kann dagegen ein einfach herzustellender Streifen aus Federstahl verwendet werden, der einen konstanten Querschnitt hat und somit durch bloßes Ablängen von kontinuierlich zugeführtem Federstahl erhalten werden kann.

Auf die Stirnseite 28 des Gehäuses 10 kann ein Deckel 60 aufgesetzt werden, der mit Öffnungen 62, 64, 66 für die Vorsprünge 30, 32 bzw. 34 versehen ist. Auf diese Weise werden die Vorsprünge 30, 32, 34 in der Platte 60 abgestützt, so daß sich ein allseitig geschlossener Kanal ergibt, der eine hohe Festigkeit aufweist. Die in der Platte 60 gelagerten Vorsprünge 30, 32 verhindern, daß sich der Kanal beim Herausziehen des Stahlbandes 22 aus diesem aufweiten kann, da sie die Spreizkräfte aufnehmen. Der in der Platte 60 gelagerte Vorsprung 34 gewahrleistet, daß die beim Herausziehen des Stahlbandes 22 aus dem Kanal 20 auftretenden Kräfte am Einlautbereich 26 des Kanals zuverlässig aufgenommen werden und nicht zu Materialverformungen oder -zerstörungen führen können. Die Platte 60 wird an der Stirnseite 28 des Gehäuses 10 dadurch gehalten, daß die mit größerem Querschnitt ausgebildeten Vorsprünge 32 auf der Außenseite der Platte 60 nach Art eines Niets umgeformt werden, so daß die Platte am Gehäuse gehalten ist.

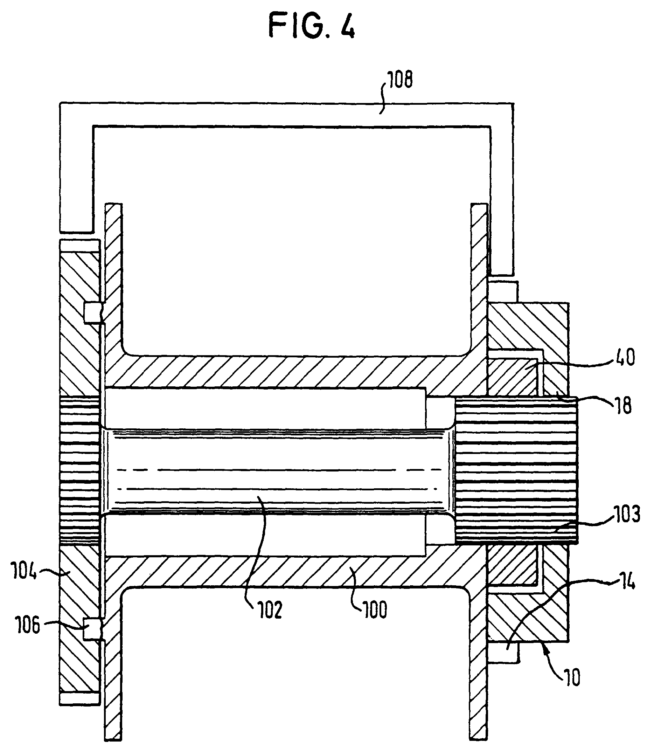

Die erfindungsgemäße Kraftbegrenzungsvorrichtung kann vorteilhafterweise bei einem Gurtaufroller verwendet werden, um eine kontrollierte Drehung der Gurtspule nach einer Sperrung der Gurtspule zu erreichen, so daß ab einer bestimmten Gurtbandabzugskraft ein Abziehen vom Gurtband aus dem Gurtaufroller möglich ist, so daß Spannungsspitzen im Sicherheitsgurtsystem vermieden bzw. abgebaut werden können. Ein solcher Gurtaufroller ist schematisch in Figur 4 gezeigt. Der Gurtaufroller enthält eine Gurtspule 100, innerhalb derer ein Torsionsstab 102 (siehe auch Figur 1 angeordnet ist). Der Torsionsstab ist an beiden Enden mit einer Keilverzahnung versehen, wobei das bezüglich Figur 4 rechte Ende 103 drehfest in der Gurtspule 100 aufgenommen ist. Am linken Ende des Torsionsstabes 102 ist die Verzahnung drehfest in einer Sperrscheibe 104 aufgenommen, die optional durch Scherstifte 106 mit der Gurtspule 100 verbunden sein kannt. Am bezüglich Figur 4 rechten Ende 103 des Torsionsstabes 102 ist auch der Mitnehmer 40 der Kraftbegrenzungsvorrichtung gelagert. Ferner greifen die Nasen 18, die an der Platte 12 des Gehäuses 10 ausgebildet sind, in die rechte Verzahnung des Torsionsstabes 102 ein. Schließlich ist eine Sperrklinke 108 vorgesehen, die auf der einen Seite in die Sperrscheibe 104 und auf der anderen Seite in die Sperrverzahnung 14 des Gehäuses 10 eingesteuert werden kann.

Dieser Gurtaufroller arbeitet in der folgenden Weise: Im Normalbetrieb ist die Gurtspule 100 mittels nicht dargestellter Lagerungen frei gegen die Wirkung einer Aufrollfeder in einem Gehäuse 110 siehe Figur 3) drehbar. Um im Bedarfsfall die Drehung der Gurtspule 100 in der Gurtband-Abzugsrichtung zu verhindern, kann die Sperrklinke 108 entweder gurtbandsensitiv oder fahrzeugsensitiv in die Sperrverzahnungen der Sperrscheibe 104 bzw. des Gehäuses 10 eingesteuert werden. In diesem Zustand kann die Gurtspule, falls die Scherstifte 106 vorhanden sind, nicht weiter in der Gurtband-Abzugsrichtung gedreht werden.

Wenn dagegen über das Gurtband ein derart hohes Drehmoment auf die Gurtspule 100 aufgebracht wird, daß die optionalen Scherstifte 106 abgeschert werden, beginnt die Gurtspule, sich unter der Wirkung der vom Gurtband aufgebrachten Kraft zu drehen. Dabei kommt es zu einer Relativdrehung zwischen dem Mitnehmer 40, der über die Verzahnung 103 drehtest mit der Gurtspule 100 verbunden ist, und dem Gehäuse 10, das von der Sperrklinke 108 und der Verzahnung 14 drehtest gehalten wird. Zu Beginn dieser Relativdrehung werden die Nasen 18 an der Platte 12 des Gehäuses 10 abgeschert, so daß sich die Verzahnung 103 des Torsionsstabes 102 relativ zum Gehäuse 10 drehen kann. Gleichzeitig werden die Laschen 36 an der Platte 12 abgeschert. Der Mitnehmer 40 verdreht sich dann relativ zum Gehäuse 10, wobei das Stahlband 22 aus dem Kanal 20 herausgezogen wird. Gleichzeitig wird der Torsionsstab 102 tordiert, da er durch die Sperrscheibe 104 an einem Ende drehfest gehalten wird.

Durch geeignete Dimensionierung des Torsionsstabes 102 und geeignete Auslegung der Kraftbegrenzungsvorrichtung kann nun der gewünschte Verlauf von Gurtbandabzugskraft über Drehung der Gurtspule und somit freigegebener Gurtbandlänge eingestellt werden. Grundsätzlich kommt es zu einer Überlagerung von zwei gegenläufigen Kennlinien: Die von der Kraftbegrenzungsvorrichtung bereitgestellte Widerstandskraft gegen eine Relativdrehung zwischen dem Mitnehmer 40 und dem Gehäuse 10 sinkt mit fortschreitender Relativdrehung ab, während das vom Torsionsstab 102 bereitgestellte Widerstandsmoment mit zunehmender Tordierung des Torsionsstabes ansteigt. In Abhängigkeit von den Verhältnissen dieser beiden Kennlinien zueinander kann insgesamt ein ansteigender oder ein abfallender Verlauf von Gurtbandabzugskraft über freigegebene Gurtbandlänge erzielt werden.

In Figur 4 ist eine Kurve von Gurtbandabzugskraft über ausgezogener Gurthandlänge gezeigt, wie sie sich mit der erfindungsgemäßen Kraftbegrenzungsvorrichtung ergibt. Es ist zu sehen, daß die Gurtbandabzugskraft zunächst stark ansteigt. In diesem Bereich der Kurve werden zunächst alle Bauteile der Kraftbegrenzungsvorrichtung vorgespannt (insbesondere "Filmspuleneffekt), ohne daß das Stahlband bereits aus dem Kanal herausgezogen wird. Der Maximalwert entspricht dem Zustand der Kraftbegrenzungsvorrichtung unmittelbar bevor sich das Stahlband in Bewegung setzt. Anschließend kommt es zu einem starken Abfall der Kennlinie, die daraus resultiert, daß das Stahlband 22 aus dem Kanal 20 herausgezogen wird. Das Absinken der Kennlinie auf einen Wert der Widerstandskraft von Meiner als Null ist darauf zurückzuführen, daß die Kennlinie bei einem dynamischen Versuch ermittelt wurde, bei dem es zu Schwingungsvorgängen kommt.

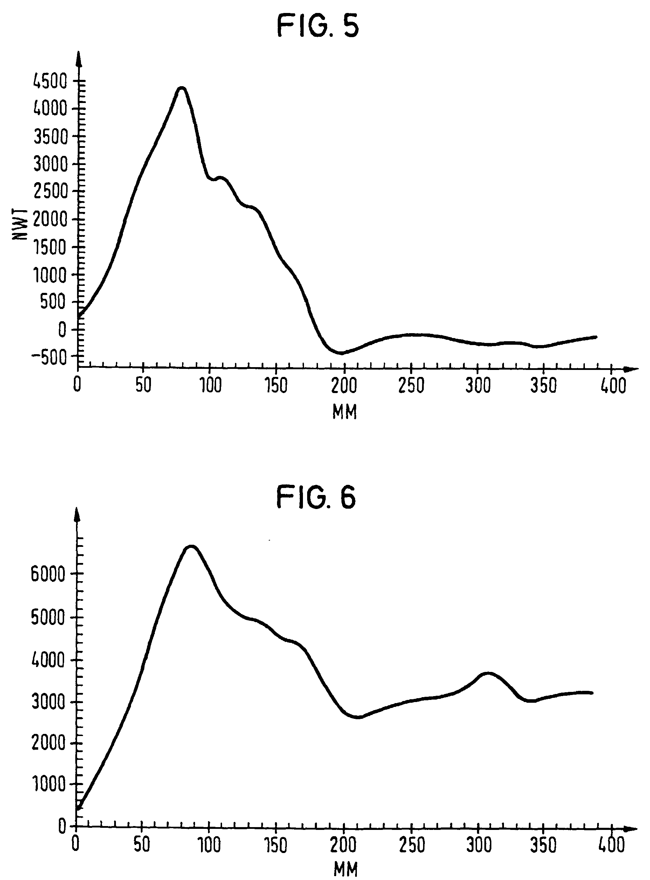

In Figur 5 ist die Kennlinie gezeigt, die bei der erfindungsgemäßen Kraftbegrenzungsvorrichtung in Verbindung mit einem Torsionsstab erhalten wurde. Im Anschluß an den erhaltenen Maximalwert der Widerstandskraft kommt es zu einem Absinken der Kennlinie, der auf die mit steigender Relativverdrehung nachlassende Reibungskraft und Umformarbeit des Stahlbandes 22 im Kanal 20 zurückzuführen ist. Anschließend steigt die Kennlinie wieder an. Dies ist darauf zurückzuführen, daß nun der Torsionsstab soweit tordiert ist, daß sich sein ansteigendes Widerstandsmoment bemerkbar macht, während der von der Kraftbegrenzungsvorrichtung stammende Anteil an der Gesamtwiderstandskraft vernachlässigbar wird oder das Stahlband bereits vollständig aus dem Kanal herausgezogen ist.

Bei einer nicht dargestellten Weiterentwicklung kann vorgesehen sein, daß der Umformungsgrad des Stahlbandes an jeder Umlenkstelle unterschiedlich ist, beispielsweise durch unterschiedliche Radien. Auf diese Weise laßt sich in der Nähe des Einlaufbereichs eine geringere Umformarbeit erreichen, was zu einer weiter abfallenden Kennlinie führt.

## Patentansprüche

1. Vorrichtung zur Kraftbegrenzung, mit einem ringförmigen Gehäuse (10), in dem eine Führungsbahn (20) gebildet ist, einem im Inneren des Gehäuses (10) konzentrisch mit diesem angeordneten Mitnehmer (40), der relativ zum Gehäuse (10) drehbar ist, und einem Zugmittel (22), das an dem Mitnehmer (40) festgelegt ist, sich entlang einem Teil seiner Länge in der Führungsbahn (20) erstreckt und durch Drehung des Mitnehmers (40) relativ zum Gehäuse (10) aus der Führungsbahn (20) herausgezogen und auf den Mitnehmer (40) aufgewickelt werden kann.

2. Vorrichtung nach Anspruch 1, dadurch gekennzeichnet, daß das Zugmittel ein Stahlband (22) mit konstantem Querschnitt ist.

3. Vorrichtung nach einem der Ansprüche 1 und 2, dadurch gekennzeichnet, daß die Führungsbahn aus einem Kanal (20) mit konstantem Querschnitt besteht, der sich zwischen zwei zueinander und zu der Drehachse konzentrischen Zylinderflächen in einer Schlangenlinie um die Drehachse des Mitnehmers (40) herum erstreckt.

4. Vorrichtung nach einem der vorhergehenden Ansprüche, dadurch gekennzeichnet, daß der Kanal (20) in dem Gehäuse (10) so ausgebildet ist, daß er von einer Stirnseite (28) des Gehäuses (10) zugänglich ist, und daß auf dieser Stirnseite Vorsprünge (30, 32, 34) ausgebildet sind, die mit Abschrägungen versehen sind, um das Einsetzen des Zugmittels (22) in den Kanal (20) zu erleichtern.

5. Vorrichtung nach Anspruch 4, dadurch gekennzeichnet, daß an der Stirnseite (28) ein Deckel (60) angebracht ist, der den Kanal (20) verschließt, und daß der Deckel (60) mit Öffnungen (62, 64, 66) versehen ist, durch die die Vorsprünge (30, 32, 34) hindurchragen.

6. Vorrichtung nach Anspruch 5, dadurch gekennzeichnet, daß einige der Vorsprünge (32) vergrößert ausgebildet und auf der Außenseite des Deckels (60) verformt sind, so daß der Deckel (60) am Gehäuse (10) befestigt ist.

7. Vorrichtung nach einem der vorhergehenden Ansprüche, dadurch gekennzeichnet, daß sie an einem Gurtaufroller für einen Fahrzeug-Sicherheitsgurt angeordnet ist und daß an dem Gehäuse (10) eine Sperrverzahnung (14) für eine Sperrklinke (108) des Gurtaufrollers ausgebildet ist.

8. Vorrichtung nach Anspruch 7, dadurch gekennzeichnet, daß mit dem Mitnehmer (40) ein Ende (103) eines Torsionsstabes (102) drehfest verbunden ist, dessen anderes Ende drehfest mit einer Gurtspule (100) des Gurtaufrollers verbunden ist.
